Europäisches Patentamt

European Patent Office

Office européen des brevets

(11) Numéro de publication: **0 289 415 B1**

(12) **FASCICULE DE BREVET EUROPEEN**

(45) Date de publication de fascicule du brevet: **28.07.93**  (51) Int. Cl.5: **G02F 1/133**

(21) Numéro de dépôt: **88401010.9**

(22) Date de dépôt: **25.04.88**

(54) **Ecran matriciel d'affichage à cristaux liquides muni de capacités de stockage.**

(30) Priorité: **28.04.87 FR 8706017**

(43) Date de publication de la demande:
**02.11.88 Bulletin 88/44**

(45) Mention de la délivrance du brevet:
**28.07.93 Bulletin 93/30**

(84) Etats contractants désignés:
**CH DE GB IT LI NL**

(56) Documents cités:
**EP-A- 0 145 520**
**EP-A- 0 202 992**
**US-A- 4 040 720**
**US-A- 4 431 271**

**PATENT ABSTRACTS OF JAPAN, vol. 8, no. 10 (P-248)[1447], 18 janvier 1984; & JP-A-58 172 626 (SUWA SEIKOSHA K.K.) 11-10-1983**

**XEROX DISCLOSURE JOURNAL, vol. 9, no. 4, juillet/août 1984, pages 261-262; F.-C. LUO: "Storage capacitors in a TFT addressed liquid crystal display panel"**

(73) Titulaire: **COMMISSARIAT A L'ENERGIE ATO-MIOUE**
**31/33, rue de la Fédération**
**F-75015 Paris Cédex 15(FR)**

(72) Inventeur: **Clerc, Jean-Frédéric**
**7, rue de Casimir Brenier**
**F-38120 Saint Egrève(FR)**

(74) Mandataire: **Mongrédien, André et al**
**c/o BREVATOME 25, rue de Ponthieu**
**F-75008 Paris (FR)**

# Description

La présente invention se rapporte au domaine de l'affichage matriciel par écrans à cristaux liquides.

On connaît dans la technique de tels écrans matriciels d'affichage à l'aide de cristaux liquides qui comportent généralement :

- une cellule fermée contenant le cristal liquide entre deux parois isolantes planes et parallèles inférieure et supérieure,
- sur la paroi inférieure, une matrice d'électrodes points conductrices, chacune commandée par un transistor à couche mince associé et des lignes alternées de conducteurs de grille et de conducteurs de source entourant chaque ligne d'électrodes points, les grilles de tous les transistors étant reliées en parallèle au conducteur de grille adjacent, les sources de tous les transistors étant reliées en parallèle au conducteur de source adjacent et les drains de chaque transistor étant reliés à l'électrode point associée,
- sur la paroi supérieure, des contre-électrodes conductrices et transparentes, disposées selon les colonnes de la matrice et formant avec les électrodes points précédentes des condensateur locaux discrets dont l'état électrique détermine l'état optique de la portion de cristal liquide située au point considéré, les contre-électrodes recevant le signal de donnée relatif à la colonne correspondante.

Un tel écran matsiciel dáffichage à bus non croisés est décrit dans EP-A-0145 520.

De façon plus particulière encore, l'invention s'applique au domaine de tels écrans matriciels à cristaux liquides utilisés pour l'affichage de signaux vidéo de télévision qui sont distribués globalement à la fréquence de 50Hz, c'est-à-dire, comme il est d'usage, sous la forme de deux demi-trames de lignes entrelacées dont chacune est distribuée à la fréquence de 25 Hz.

Les conducteurs ou lignes d'amenée des informations électriques aux différentes grilles et aux différentes sources des transistors en couche mince sont généralement déposées sur la paroi inférieure de la cellule sous forme de lignes conductrices parallèles ou croisées selon les deux directions principales de la matrice. Ces lignes communément appelées "bus" par l'homme de métier, conduisent ainsi selon le cas, à des architectures connues sous les noms de "architectures à bus croisés" ou "architecture à bus non croisés". Une variante de l'architecture à bus non croisés est connue sous le nom d'architecture "papillon" (en terminologie anglo-saxonne "butterfly drains") et comporte deux demi-électrodes de point pour chaque point de la matrice.

Dans le cas général, le transistor associé à l'électrode point image par son électrode de drain fonctionne sous la commande de l'électrode grille comme un simple interrupteur ouvert ou fermé, mettant, selon le cas, le signal de source en communication ou non avec l'électrode point image, ou, dans le cas particulier de l'architecture "papillon", les deux demi-électrodes de point en communication.

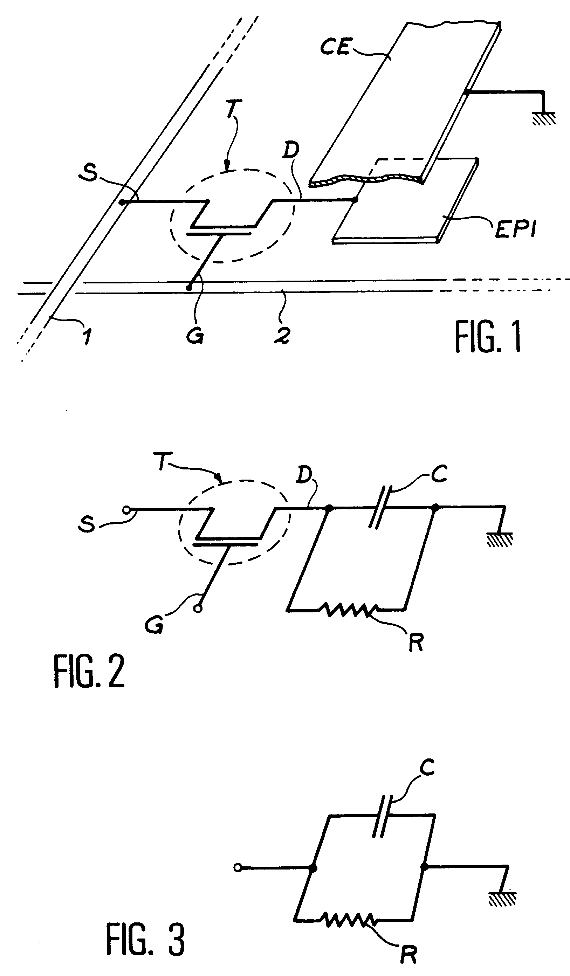

On commencera d'abord par rappeler l'état de l'art antérieur en utilisant comme référence un écran matriciel d'affichage à cristaux liquides dans une architecture classique à bus croisés. Le principe de fonctionnement d'un tel système est représenté sur la figure 1 où l'on voit le transistor à couches minces T comportant sa grille de commande G, son électrode de source S et son électrode de drain D, cette dernière étant reliée à l'électrode de point image EPI. Comme on l'a rappelé précédemment, cette électrode de point image fonctionne en liaison avec un morceau correspondant de contre électrode CE situé généralement sur la paroi opposée, ici supérieure de la cellule. Cette contre-électrode CE est reliée à la masse.

Dans une structure connue de ce genre, le signal de donnée ou d'écriture est envoyé sur le bus de source 1 et le signal de grille G commandant l'ouverture ou la fermeture de tous les transistors d'une même ligne sur le bus de grille 2. Comme indiqué précédemment, l'architecture décrite ici appartient au type d'architecture dans lequel les bus de source et de grille sont croisés à angle droit selon deux directions de la matrice sur la plaque inférieure de la cellule. La différence de potentiel qui s'établit entre l'électrode du point image EPI et le morceau de contre-électrode CE associée qui forment entre eux un mini-condensateur, impose à la partie du cristal liquide qui baigne le système et située entre ces deux électrodes, un champ électrique. C'est ce champ qui, en modifiant les propriétés locales du cristal, permet d'afficher en ce point une transparence qui peut aller de zéro à un, c'est-à-dire du noir au blanc en passant par toutes les valeurs de gris intermédiaires.

Ce principe de fonctionnement connu étant rappelé, on a représenté sur la figure 2, le circuit électrique équivalent du transistor T et du point image correspondant associé en désignant par C la capacité entre l'électrode EPI du point image et le morceau de contre-électrode CE associé, et par R la résistance de fuite des charges électriques à travers le cristal liquide concerné.

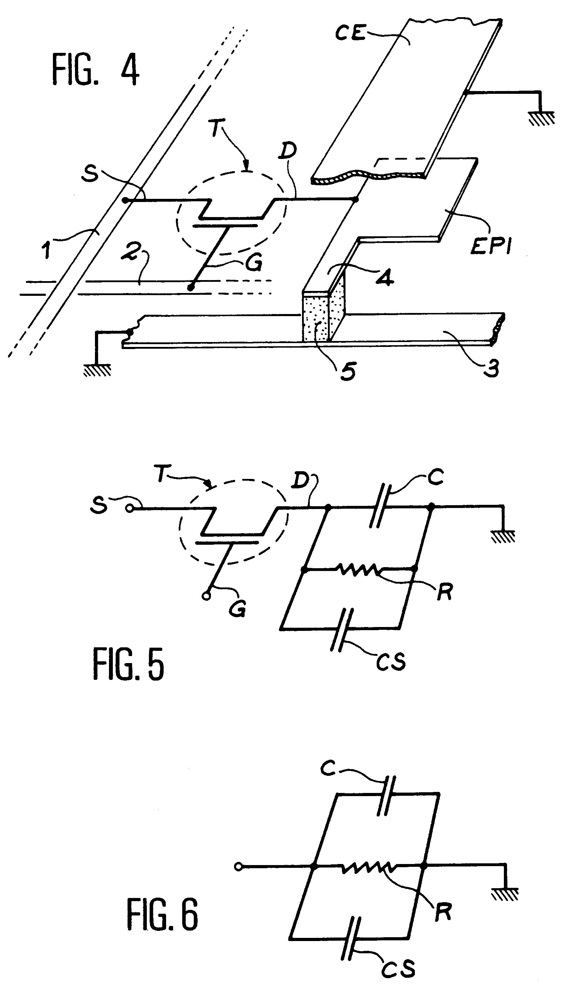

Lorsque le transistor T est en circuit ouvert, c'est-à-dire entre deux moments d'inscription du signal de donnée sur l'écran, le circuit équivalent de l'ensemble est représenté sur la figure 3 où il s'analyse comme un circuit RC en parallèle ayant un potentiel flottant d'un côté et étant relié à la masse de l'autre. Un tel circuit se décharge spontanément comme il est bien connu selon un régime exponentiel avec une constante de temps $\tau = RC$.

Le principe connu d'affichage matriciel par écran à cristal liquide consiste à mettre en oeuvre des séquences de temps d'écriture et de temps de mémorisation.

Pendant un premier temps, ou temps d'écriture, le transistor T précédent est fermé sous l'impulsion d'un signal de grille et il en est ainsi pour tous les transistors T d'une même ligne de la matrice. C'est pourquoi d'ailleurs, ce premier temps est parfois appelé temps de sélection de ligne. Conformément aux caractéristiques précédemment rappelées d'un signal vidéo, la fréquence d'apparition de ce temps de sélection de ligne est de 25 Hz dans le système normalisé actuel. Lorsqu'une ligne de la matrice est ainsi préparée pour l'écriture, les différents bus de source de cette même matrice apportent sur chaque électrode de point image de la ligne la charge électrique Q que l'on veut stocker en ce point et qui est caractéristique de l'information que l'on veut y écrire. Le temps d'écriture précédent est, pour donner un ordre de grandeur, de l'ordre de 64 microsecondes. A la fin de ce temps d'écriture, tous les transistors T d'une même ligne reçoivent par le bus de commande de grille 2 une impulsion d'ouverture et les charges électriques Q sont laissées à leur place sur chaque électrode de point image alors isolée électriquement.

Pendant un deuxième temps qui correspond à l'ouverture du transistor et que l'on appelle temps de mémorisation on maintient, autant que faire se peut, les charges Q ainsi accumulées sur chaque électrode de point. Malheureusement, la conduction électrique du condensateur C constituant chaque point image et qui est due à sa résistance de fuite est généralement plus que suffisante pour que la charge stockée sur le point correspondant disparaisse avant l'arrivée, à la fréquence 25 Hz, soit 40 ns plus tard, de l'information suivante du signal vidéo.

En effet, la loi de disparition des charges est de forme exponentielle et peut s'écrire $Q = Q_0 e^{-t/\tau}$, $\tau$ étant la constante de temps du phénomène, égale, pour des écrans courants, à 60 millisecondes. On voit donc que ce temps $\tau$ au bout duquel il ne subsiste plus que la moitié des charges en chaque point n'est pas du tout négligeable devant le temps de rafraîchissement du signal vidéo (en terminologie anglo-saxonne "refresh time") qui pour une fréquence de 25 Hz est égale à 40 millisecondes. Il en résulte par conséquent que l'observateur qui regarde l'écran perçoit très vite un phénomène de papillotement dû au fait que les molécules de cristal liquide, insuffisamment excitées, reviennent à leur état de transparence initiale entre deux balayages de ligne, en effaçant en grande partie l'information écrite.

Pour résumer l'exposé qui précède, on peut dire que la cartographie de répartition des charges Q sur les différentes électrodes points de la matrice évolue à la fréquence de 25 Hz (phénomène de rafraîchissement de l'image), mais que cette fréquence est trop basse pour masquer la perte spontanée de cette information par consommation de ces mêmes charges dans les résistances de fuite des différents condensateurs points de la matrice.

Par ailleurs, la constante de temps $\tau$ précédente peut s'écrire $\tau = \rho\epsilon$, formule dans laquelle $\rho$ est la résistivité du cristal liquide et $\epsilon$ sa constante diélectrique. Or, la résistivité $\rho$ diminue de façon importante avec la température de façon telle, par exemple, que dans une ambiance à 60°C, la constante de temps $\tau$ descend jusqu'à des valeurs de l'ordre de 20 millisecondes, ce qui accentue considérablement le papillotement évoqué précédemment. Ceci interdit l'utilisation d'écrans matriciels dans des conditions sévères, telles qu'on en rencontre dans certaines applications industrielles ou dans des installations soumises à des températures supérieures aux températures ambiantes courantes.

Pour pallier les inconvénients précédents, on a déjà proposé dans l'état de la technique de recourir à des capacités additionnelles dites capacités de stockage permettant d'augmenter par un artifice la capacité donc la constante de temps du circuit de décharge de chaque condensateur associé à chaque point image.

Une solution connue de ce genre et représentée sur la figure 4 consiste à prévoir sur la matrice de l'écran des lignes de conducteurs additionnels ou bus mis à la masse et à placer un isolant sans fuite au niveau de chaque point de la matrice entre un prolongement de l'électrode point image et ce bus de masse. Cet isolant sans fuite constitue la capacité de stockage.

Sur la figure 4, on retrouve avec les mêmes références que sur la figure 1, les éléments d'une structure d'écran matriciel au voisinage d'un point image. Dans cette réalisation connue de la figure 4, un bus additionnel à la masse 3 est prévu, ainsi qu'un prolongement 4 de l'électrode point image EPI de façon à ce que ces deux derniers éléments se superposent partiellement à angle droit et on place entre les deux un pavé de corps isolant sans fuite 5 qui constitue ce que l'on appelle une capacité de stockage.

La figure 5 montre avec les mêmes références que précédemment, le circuit électrique équivalent avec la capacité C du point image et la capacité de stockage CS dont on voit qu'elle est en parallèle avec la capacité C.

Lorsque pendant les temps de mémorisation le transistor T est fermé, le circuit électrique équivalent est celui de la figure 6 que l'on peut rapprocher de celui de la figure 3, à ceci près que les capacités C et CS sont en parallèle, s'additionnent et viennent par conséquent augmenter la constante de temps de ce circuit qui devient :

$$\tau = R(C + CS)$$

On conçoit par conséquent que, si CS est notablement supérieur à C, on obtient ainsi une augmentation importante de la constante de temps $\tau$ et que le potentiel électrique appliqué à chaque mini-condensateur peut subsister de façon satisfaisante entre deux rafraîchissements du signal vidéo successifs, évitant ainsi en grande partie le papillotement.

Malheureusement, cette technique connue n'a été appliquée jusqu'à maintenant qu'aux seules structures d'écrans matriciels connus sous le nom de structures à bus croisés, et elle a le grave inconvénient d'exiger des conducteurs additionnels qui compliquent ces structures.

La présente invention a précisément pour objet l'extension a l'architectures à bus non croisés de la notion de capacité de stockage, permettant ainsi à cette architecture, qui a par ailleurs de gros avantages sur l'architecture à bus croisés, de bénéficier également et de façon particulièrement simple des avantages de la capacité de stockage.

A cet effet, la présente invention a pour objet un écran matriciel d'affichage à cristaux liquides dans une architecture du type à bus non croisés, caractérisé en ce qu'il est muni en chaque point de la matrice, d'une capacité de stockage constituée d'un espaceur conducteur reliant une partie de la surface de l'électrode point à la partie en regard de la contre-électrode, avec interposition, sur au moins l'une des deux électrodes précédentes, d'une couche isolante mince.

Les structures des écrans matriciels selon l'invention permettent ainsi de façon simple et sans utilisation de bus additionnels de faire bénéficier l'architecture à bus non croisés de la technique des capacités de stockage, ce qui ne paraissait ni simple ni même envisageable jusqu'à ce jour pour l'homme de métier.

De toute façon, l'invention sera mieux comprise en se référant à la description qui précède ou qui suit de l'art antérieur et de l'objet de l'invention, description donnée surtout à titre illustratif et non limitatif et faite en se référant aux figures 1 à 21, sur lesquelles :

- la figure 1 est un rappel de l'architecture classique connue d'un écran matriciel à cristal liquide,
- les figures 2 et 3 montrent les circuits électriques équivalents du schéma de la figure 1 dans les cas respectifs de fermeture et d'ouverture du transistor à couches minces associé,
- la figure 4, qui représente également l'art connu, représente l'application d'une capacité de stockage à la structure à bus croisés de la figure 1,
- les figures 5 et 6 montrent les circuits électriques équivalent au schéma de la figure 4, dans les hypothèses respectives de fermeture et d'ouverture du transistor associé à chaque point image,
- la figure 7 montre le schéma de principe d'une structure d'écran matriciel à cristal liquide selon l'art connu dans l'architecture appelé à bus non croisés,
- les figures 8 et 9 montrent les schémas électriques équivalents de la structure de la figure 7 dans les hypothèses respectives de transistors fermés et de transistors ouverts,
- la figure 10 montre la structure selon l'invention dans une architecture à bus non croisés d'un écran matriciel muni d'une capacité de stockage,
- les figures 11 et 12 montrent les circuits électriques équivalents du schéma de la figure 10 dans les hypothèses respectives des transistors de commande fermés et ouverts,
- la figure 13 montre l'état de la technique connu pour une architecture du type papillon sans capacité de stockage d'une structure d'écran matriciel à cristaux liquides,
- les figures 14 et 15 montrent respectivement les circuits électriques équivalents de la structure de la figure 13 dans les hypothèses de transistors fermés puis de transistors ouverts,
- la figure 16 montre, dans une architecture de type papillon, une structure d'écran matriciel muni d'une capacité de stockage,
- les schémas 17, 18, 19, 20 et 21 expliquent les circuits électriques équivalents dans le cas général (figure 17) dans le cas des transistors à circuit fermé (figure 18) à circuit ouvert (figures 19, 20 et 21).

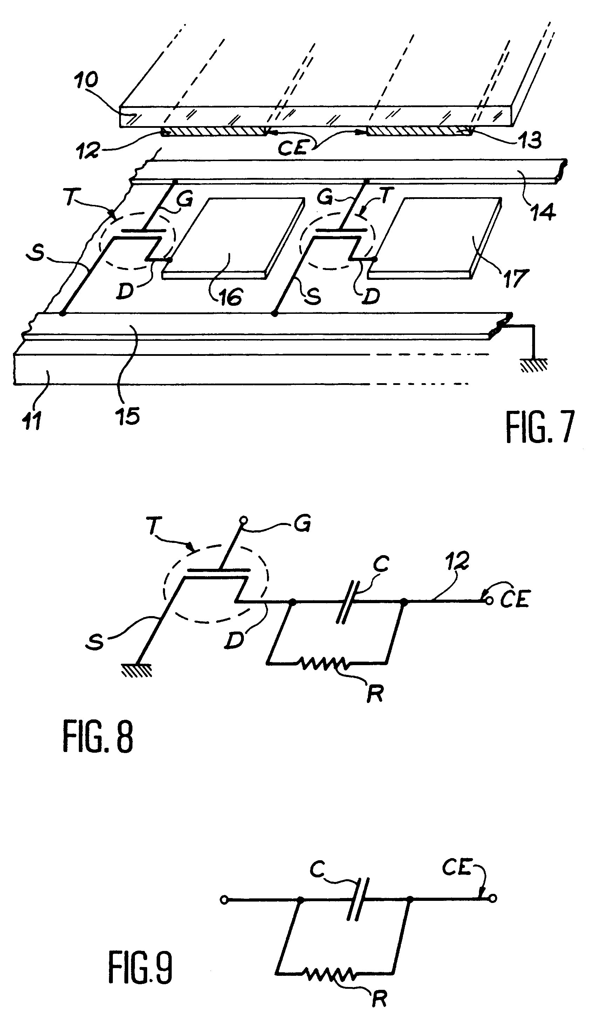

En considérant d'abord les écrans matriciels utilisant l'architecture dite à bus non croisés, on commencera, en se référant à la figure 7, par décrire une architecture de ce type, en soi connue.

Sur la figure 7, qui représente sous forme éclatée les élements d'un écran matriciel d'affichage à cristaux liquides, on voit les parois supérieure 10 et inférieure 11 d'une cellule à cristal liquide, ce dernier n'étant évidemment pas visible sur la figure. Comme connu, sur la paroi supérieure 10 constituée par exemple par un substrat de verre, se trouve placées selon les colonnes de la matrice des lignes de contre-électrodes 12 et 13 destinées à recevoir le signal vidéo ou signal de donnée. Sur la paroi inférieure 11 se trouvent disposés selon les lignes de la matrice et de façon alterné respectivement des bus de commande de grille 14 et des bus de source 15. Ces bus de source 15 sont mis à la masse et communs à toutes les électrodes de point image d'une même ligne, telles que 16 et 17. On retrouve dans cette structure les transistors en couche mince T avec leurs électrodes de grille G, leurs électrodes de source S et leurs électrodes de drains D reliées à chaque électrode de point image de la matrice.

Le schéma électrique équivalent de la structure de la figure 7 pour un point de l'image est représenté sur la figure 8 dans laquelle on retrouve avec les mêmes références les éléments de la figure 7. Comme dans les figures 2, 3, 4, 5 et 6 précédentes, C désigne la capacité entre chaque électrode point image 16, 17 et la partie de contre électrode 12, 13 située en regard, et R la résistance de fuite du mini-condensateur correspondant à chaque point image.

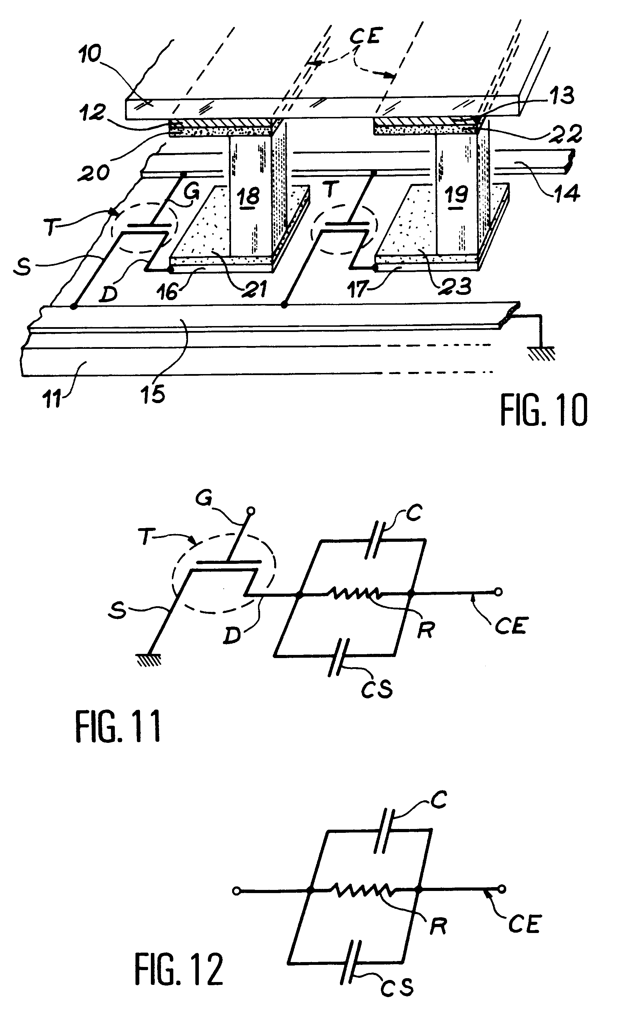

La figure 9 donne l'état du circuit électrique de la figure 8, lorsque durant le temps de mémorisation du signal vidéo par l'écran, le transistor T de la figure 8 étant ouvert, le circuit RC précédent est fermé sur lui-même entre une électrode de source S à un potentiel flottant et une contre électrode CE reliée au signal vidéo de donnée.

Comme dans le cas de l'architecture à bus croisés de la figure 6, le circuit de la figure 9 est un circuit qui se décharge exponentiellement avec une constante de temps $\tau = RC$, entraînant toutes les conséquences néfastes déjà expliquées qui se traduisent par le phénomène de papillotement.

Selon l'invention, un tel écran matriciel à architecture à bus non croisés est représenté sur la figure 10 muni de capacités de stockage.

Sur cette figure 10, on retrouve l'ensemble des éléments de la figure 7 portant les mêmes références auxquelles viennent s'ajouter les espaceurs conducteurs 18 et 19 sous la forme de pavés de matériau conducteur qui s'étendent entre la contre électrode CE de la paroi supérieure et les électrodes point image 16, 17 de la paroi inférieure avec interposition d'une couche de diélectrique sans fuite 20, 21, 22 et 23 entre les électrodes en regard et les espaceurs conducteurs 18, 19.

Selon l'invention ces espaceurs conducteurs 18, 19 peuvent être situés indifféremment en n'importe quel endroit de la surface des électrodes de point image 16 et 17 et la partie de la contre-électrode conductrice CE correspondante.

Ils peuvent être constitués de tout matériau conducteur connu et, par exemple, de plots métalliques déposés et gravés lors de la fabrication de la matrice, soit encore de colles conductrices sérigraphiées ou de fibres de verre recouvertes de métal. Leur forme géométrique peut avantageusement revêtir celle de parallélépipèdes comme représenté dans le mode de mise en oeuvre de la figure 10. Les isolants 20, 21, 22 et 23, nécessaires pour créer les capacités locales désirées comme on le verra ci-après sont réalisées en des matériaux diélectriques dont les fuites sont les plus faibles possibles, telles que, par exemple, des polymères comme les polyimides, le nylon, etc. la silice, les nitrures etc., et tout corps connu par ailleurs pour passiver les transistors et/ou orienter les cristaux liquides.

Les figures 11 et 12 qui suivent permettent de vérifier la création, à l'aide des structures spécifiques de la figure 10, d'une capacité de stockage en chaque point d'image de la matrice.

Sur la figure 11, on a représenté le circuit électrique équivalent des éléments de la figure 10 qui portent les mêmes références.

Si l'on appelle C la capacité de l'unique condensateur formé par les électrodes en présence telles que 12 et 16 extérieurement à l'espaceur conducteur 18, et CS la capacité créée localement entre ces deux mêmes électrodes 12 et 16 par le système des deux isolants 20 et 21 d'une part et de l'espaceur 18, il est clair que ces deux capacités sont en parallèle et l'on obtient un schéma électrique tel que celui de la figure 11. Lors de l'ouverture du transistor T, c'est-à-dire lors du temps de mémorisation, le schéma est celui de la figure 12, dans lequel l'électrode de drain D est à un potentiel flottant et la contre-électrode CE est au potentiel du signal vidéo de donnée. Le schéma de la figure 12 permet d'écrire la constante de temps $\tau$ du circuit électrique de la figure 12 sous la forme :

$$\tau = R(C + CS)$$

La capacité CS constituée par le sandwich "portion de l'électrode point, isolant, espaceur conducteur, isolant et portion de la contre-électrode" agit bien comme une capacité de stockage électriquement équivalente à la capacité CS de la figure 6 de l'art antérieur.

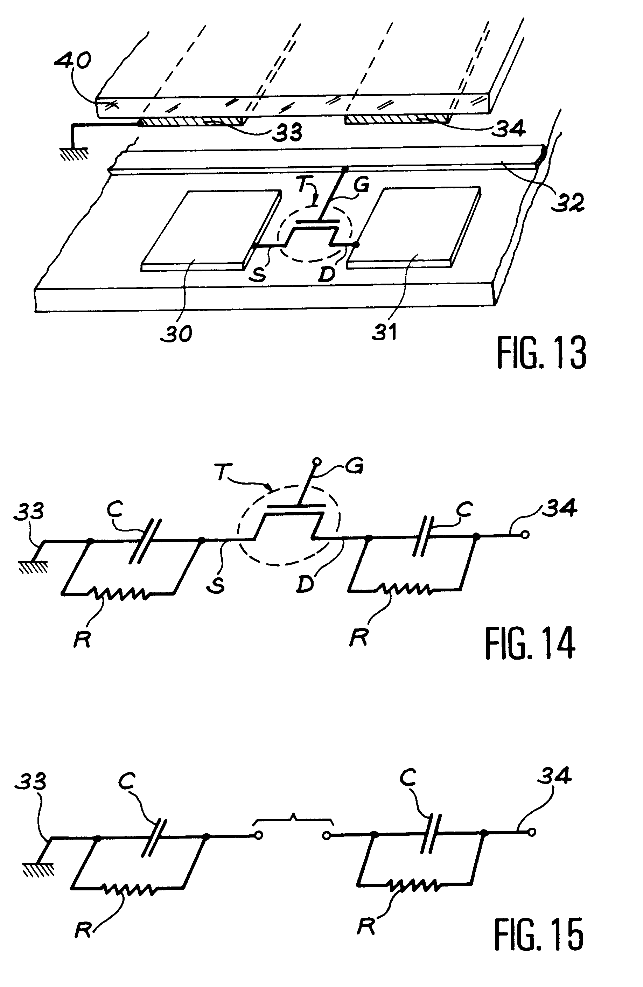

On décrira maintenant, en se référant aux figures 13 à 17, l'application d'une capacité de stockage à l'architecture d'un écran matriciel à cristaux liquides réalisé dans la structure "papillon".

En se référant à la figure 13, et aux deux schémas 14 et 15 qui en sont les équivalents électriques, on rappellera d'abord ce qu'est la structure connue en soi sous le nom d'architecture "papillon" dans un tel écran matriciel.

Sur la figure 13 on retrouve avec les mêmes références que sur les figures antérieures, les mêmes éléments de structure. Deux particularités sont néanmoins caractéristiques de cette structure "papillon."

La première est que chaque électrode de point image est divisée en deux demi-électrodes, telles que 30 et 31 sur la figure 13, ces deux demi-électrodes de point 30 et 31 étant respectivement reliées au drain et à la source du transistor T à couches minces, associé au point correspondant.

La deuxième particularité de cette structure réside dans le fait qu'elle ne comporte, selon les directions de ligne de la matrice, comme seul conducteur, que des bus de commande de grille, tels que 32, qui relient en parallèle comme dans les autres structures les différentes électrodes de grille G des transistors T d'une même ligne.

Enfin, sur la paroi isolante supérieure 40, sont situées, selon les directions de colonne de la matrice de l'écran des contre-électrodes, respectivement une électrode de référence 33 mise à la masse au-dessus de la demi-électrode de point 30, et une contre-électrode alimentée par le signal de donnée 34 au-dessus de la deuxième demi-électrode de point 31.

Il est facile de voir que le circuit électrique équivalent d'une telle structure correspond à celui de la figure 14 sur laquelle on a repris les références correspondantes de la figure 13. Les capacités C et les résistances de fuites R représentées sur la figure 14 correspondent respectivement aux capacités et aux résistances de fuite de chacun des demi-condensateurs correspondant à l'association de chaque demi-électrode de point avec la contre-électrode correspondante.

Lorsque pendant le temps de mémorisation tous les transistors T commandent l'ouverture du circuit drain-source, sous l'influence d'un signal transmis par le bus de commande 32, le circuit électrique équivalent devient celui de la figure 15 dans lequel les deux demi-circuits sont isolés et ont leurs électrodes correspondantes S et D à potentiel flottant. Dans ces conditions, chaque demi-capacité de point image a une constante de temps $\tau = RC$ et se décharge par conséquent de façon exponentielle avec cette constante de temps $\tau$ comme dans les autres architectures d'écrans matriciels.

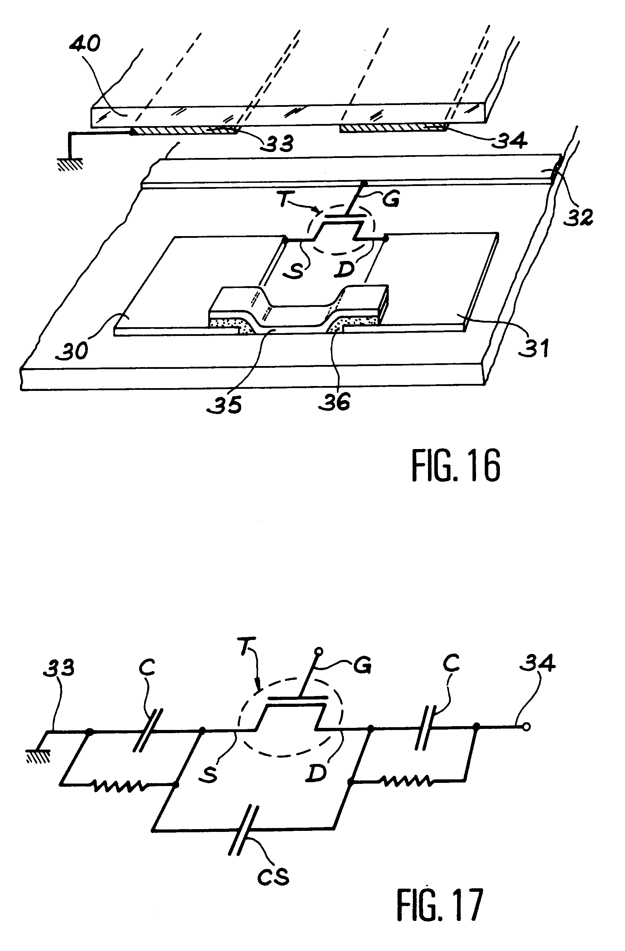

Pour munir une telle structure d'une capacité de stockage supprimant le papillotement lors de son alimentation avec un signal vidéo, on réalise comme dans l'exemple de la figure 16, un couplage capacitif des deux demiélectrodes 30 et 31 précédentes à l'aide d'un barreau conducteur métallique 35 lui-même isolé, par une couche isolante 36, des deux demi-électrodes 30 et 31 précédentes.

Cette structure particulièrement simple constitue effectivement pour le point image considéré une capacité de stockage comme on s'en convaincra en suivant les explications qui suivent et qui se réfèrent aux figures 17 à 21. Dans ce cas particulier de l'architecture papillon toutefois, l'examen électrique permettant de s'assurer que la structure de la figure 16 contient bien une capacité de stockage, est plus délicat, car il faut cette fois pour établir le raisonnement prendre en compte la répartition des charges électriques sur les différentes électrodes.

Le schéma électrique équivalent de la structure de la figure 16 est donné sur la figure 17 où l'on retrouve les mêmes références et s'interprète sans difficulté particulière. Il faut simplement comprendre que la capacité CS est la somme des capacités élémentaires que constituent chacune des demi-électrodes 30 et 31 avec le barreau conducteur métallique 35 au travers de l'isolant sans fuite 36.

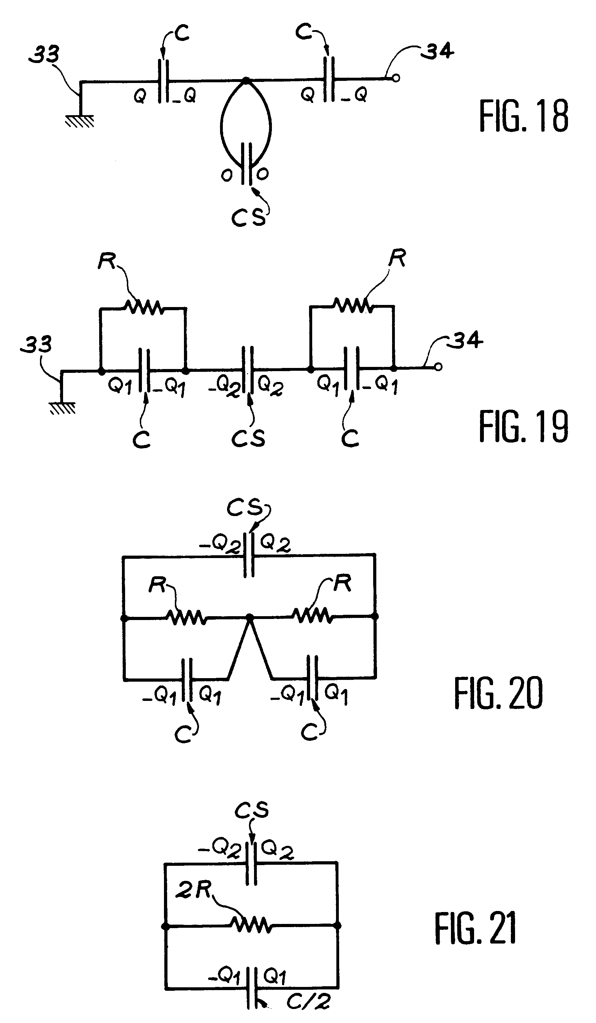

Pendant le temps d'adressage des lignes, c'est-à-dire pendant la fermeture de chacun des transistors T, le schéma électrique équivalent est celui de la figure 18 dans lequel, les charges électriques et les armatures des deux condensateurs C se répartissent comme indiqué sur la figure en Q et -Q. Cette charge électrique Q sur les armatures est telle que $Q = CxV_s/2$ si $V_s$ est la tension instantanée du signal de donnée $V_s$ appliquée à la contre-électrode 34. Le condensateur CS est en court-circuit pur et simple et ses charges aux armatures sont nulles.

L'équivalent électrique du même circuit lorsque le transistor T est en circuit ouvert durant la phase de mémorisation est représenté sur la figure 19 pour l'établissement de laquelle on a tenu compte du fait que la charge Q précédente se répartit en Q1 sur l'armature de la capacité du point image 30 et Q2 sur l'armature de la capacité de stockage 35. De façon symétrique d'ailleurs, la charge -Q se répartit en -Q1 et -Q2 et bien sûr Q = Q1 + Q2. Pour progresser dans l'interprétation de ce schéma équivalent, il faut remarquer que le signal de donnée 34 n'ayant pas de composante continue est un signal alternatif dont la valeur moyenne est nulle. Il est donc équivalent électriquement au signal de référence présent en 33 et l'on peut boucler le système sur lui-même pour obtenir le schéma équivalent de la figure 20.

Le schéma de la figure 20 se simplifie enfin selon celui de la figure 21 qui permet d'affirmer qu'il s'agit bien d'un circuit de type RC dont la constante de temps de décharge spontanée est $\tau = 2R(C/2 + CS)$.

On vérifie ainsi que la capacité CS vient bien s'ajouter dans la détermination de cette constante de temps à la capacité C déterminée entre les électrodes points et les contre-électrodes pour jouer ainsi le rôle d'une capacité de stockage.

## Revendications

1. Ecran matriciel d'affichage à cristaux liquides comportant de façon connue, dans une architecture du type à bus non croisés :
   - une cellule fermée contenant le cristal liquide entre deux parois isolantes planes et parallèles inférieure (11) et supérieure (10),
   - sur la paroi inférieure, une matrice d'électrodes points conductrices (16, 17), chacune commandée par un transistor (T) à couche mince associé et des lignes alternées de conducteurs de grille et de conducteurs de source entourant chaque ligne d'électrodes points, les grilles (G) de tous les transistors étant reliées en parallèle au conducteur de grille adjacent, les sources (S) de tous les transistors étant reliées en parallèle au conducteur de source adjacent et les drains (D) de chaque transistor étant reliés à l'électrode point associée (16, 17),
   - sur la paroi supérieure, des contre-électrodes conductrices et transparentes (12,13), disposées selon les colonnes de la matrice et formant avec les électrodes points précédentes des condensateurs locaux discrets dont l'état électrique détermine l'état optique de la portion de cristal liquide située au point considéré, les contre-électrodes recevant le signal de donnée relatif à la colonne correspondante,

   caractérisé en ce qu'il est muni en chaque point de la matrice, d'une capacité de stockage (CS) constituée d'un espaceur conducteur (18, 19) reliant une partie de la surface de l'électrode point à la partie en regard de la contre-électrode, avec interposition, sur au moins l'une des deux électrodes précédentes, d'une couche isolante mince (20,21,22,23).

## Claims

1. Liquid crystal matrix display screen having in known manner, in an uncrossed bus-type architecture:
   - a closed cell containing the liquid crystal between two lower (11) and upper (10) parallel, planar, insulating walls,
   - on the lower wall a matrix of conductive point electrodes (16, 17), each controlled by a thin film transistor (T) and alternating lines of gate conductors and source conductors surrounding each point electrode line, the gates (G) of all the transistors being connected in parallel to the adjacent gate conductor, the sources (S) of all the transistors being connected in parallel to the adjacent source conductor and the drains (D) of each transistor being connected to the associated point electrode (16, 17),
   - on the upper wall conductive, transparent counterelectrodes (12, 13) disposed in accordance with the columns of the matrix and forming with the preceding point electrodes, discrete local capacitors, whereof the electrical state determines the optical state of the liquid crystal portion located at the considered point, the counter-electrodes receiving the data signal relative to the corresponding column,

   characterized in that it is provided at each point of the matrix with a storage capacitance (CS) constituted by a spacer conductor (18, 19) connecting part of the surface of the point electrode to the facing part of the counterelectrode, with the interposing of a thin insulating layer (20, 21, 22, 23) on at least one of the two aforementioned electrodes.

## Patentansprüche

1. Flüssigkristall-Matrix-Anzeigeschirm, auf übliche Weise in nicht überkreuzter Busarchitektur umfassend:
   - eine geschlossene Zelle, die den Flüssigkristall zwischen zwei ebenen, parallelen und isolierenden Wänden, einer unteren (11) und einer oberen (10), enthält,
   - auf der unteren Wand eine Matrix von leitenden Punktelektroden (16, 17), jede gesteuert von einem Zugeordneten Dünnschichttransistor, und Zeilen, abwechselnd von Gate-Leitern und Source-Leitern, die jede Punktelektrodenzeile umgeben, wobei die Gates (G) aller Transistoren parallel mit dem benachbarten Gate-Leiter, die Sources (S) aller Transistoren parallel mit dem benachbarten Source-Leiter verbunden sind, und das Drain (D) jedes Transistors mit der zugeordneten Punktelektrode (16, 17) verbunden ist,
   - auf der oberen Wand leitende und transparente Gegenelektroden (12, 13), die entlang der Matrixspalten angeordnet sind und mit den oben genannten Punktelektroden diskrete, lokale Kondensatoren bilden, deren elektrischer Zustand den optischen Zustand des Flüssigkristallteils am entsprechenden Ort bestimmt, wobei die Gegenelektroden das auf die entsprechende Spalte bezogene Eingabesignal erhalten,
dadurch gekennzeichnet, daß er an jedem Matrixpunkt mit einer Speicherkapazität (CS) ausgestattet ist, gebildet aus einem leitenden Abstandshalter (18, 19), der einen Teil der Punktelektrodenoberfläche mit dem gegenüberliegenden Teil der Gegenelektrode verbindet, wobei auf mindestens einer der oben genannten Elenktroden eine dünne, isolierende Schicht (20, 21, 22, 23) zwischengelegt ist.

FIG. 1

FIG. 2

FIG. 3

FIG. 4

FIG. 5

FIG. 6

FIG. 7

FIG. 8

FIG.9

FIG. 10

FIG. 11

FIG. 12

FIG. 13

FIG. 14

FIG. 15

FIG. 16

FIG. 17

FIG. 18

FIG. 19

FIG. 20

FIG. 21